# EUROPEAN PATENT APPLICATION

(11) **EP 4 683 015 A2**
(43) Date of publication of application: **21.01.2026**
(21) Application number: 25189249.3
(22) Date of filing: 14.07.2025
(51) Int. Cl.: H01M 8/1226, H01M 4/86, H01M 4/90, H01M 8/1213, H01M 8/1253, H01M 8/12

(54) **ELECTROCHEMICAL CELLS WITH REDOX STABLE FUEL ELECTRODE SUPPORTS**

(30) Priority: 16.07.2024 US 202463671965 P
(71) Applicant: Bloom Energy Corporation, San Jose, CA 95134 (US)
(72) Inventor: COX, Dalton, San Jose, 95134 (US); EL BATAWI, Emad, San Jose, 95134 (US); PAN, Keji, San Jose, 95134 (US); SCHMAUSS, Travis A., San Jose, 95134 (US)
(74) Representative: Wichmann, Hendrik

(57) **Abstract**

An electrochemical cell (100A) includes an electrolyte (200) having a first side and an opposing second side, an oxygen electrode (400) located on the first side of the electrolyte (200), a fuel electrode support (320), and an active fuel electrode (310) located between the fuel electrode support (320) and the second side of the electrolyte (200). The fuel electrode support (320) includes a cermet containing a nickel containing phase and a ceramic phase. The ceramic phase may include 4 to 10 mol percent (mol%) yttria stabilized zirconia ((4-10)-YSZ)) or zirconia doped with at least one of alumina, ceria or titania. Alternatively or in addition, the nickel containing phase may include nickel doped with at least one of magnesium oxide, calcium oxide, or titanium oxide.

## Description

### FIELD

Aspects of the present disclosure relate generally to electrochemical cells, and particularly to electrochemical cells including redox stable fuel electrode (e.g., anode) supports.

### BACKGROUND

A typical solid oxide fuel cell includes a ceramic electrolyte located between an anode electrode and a cathode electrode. In general, thin electrolytes are desired to provide low ionic resistance. However, thin electrolytes may be damaged during stack manufacturing, reduction-oxidation cycling, and/or thermal cycling.

### SUMMARY

According to various embodiments, an electrochemical cell includes an electrolyte having a first side and an opposing second side, an oxygen electrode located on the first side of the electrolyte, a fuel electrode support, and an active fuel electrode located between the fuel electrode support and the second side of the electrolyte. The fuel electrode support includes a cermet containing a nickel containing phase and a ceramic phase. The ceramic phase may include 4 to 10 mol percent (mol%) yttria stabilized zirconia ((4-10)-YSZ)) or zirconia doped with at least one of alumina, ceria or titania. Alternatively, or in addition, the nickel containing phase may include nickel doped with at least one of magnesium oxide, calcium oxide or titanium oxide.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1A is a perspective view of an electrochemical stack, according to various embodiments of the present disclosure, and FIG. 1B is cross-sectional view of a portion of the stack of FIG. 1A.
FIG. 2A is a cross-sectional view of a fuel electrode supported electrochemical cell, and FIG. 2B is a cross-sectional view of a co-supported electrochemical cell, according to various embodiments of the present disclosure.
FIG. 3A is an exploded perspective view of an alternative fuel electrode containing support ribs, according to various embodiments of the present disclosure, and FIG. 3B is a cross-sectional view of a portion of the fuel electrode of FIG. 3A.
FIG. 4A is an exploded perspective view of an alternative fuel electrode, according to various embodiments of the present disclosure, and FIG. 4B is a cross-sectional view of a portion of the fuel electrode of FIG. 4A.

### DETAILED DESCRIPTION

The present disclosure is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough and fully conveys the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrogen (H₂) or a hydrocarbon fuel, such as methane, natural gas, pentane, ethanol, or methanol. The fuel cell operating at a typical temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

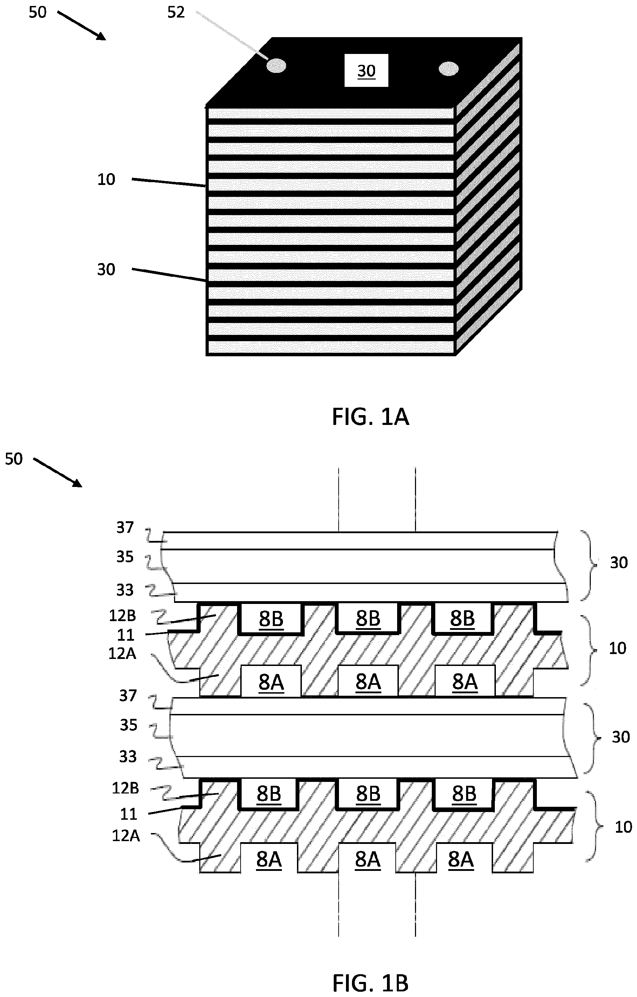

FIG. 1A is a perspective view of an electrochemical cell stack 50, and FIG. 1B is a sectional view of a portion of the stack 50, according to various embodiments of the present disclosure. In the embodiments below, the stack 50 is described as being operated as a solid oxide fuel cell (SOFC) stack 50. However, it should be noted that the stack 50 may also be operated as an electrolyzer (e.g., a solid oxide electrolyzer cell (SOEC) stack). Referring to FIGS. 1A and 1B, the stack 50 includes electrochemical cells 30, such as fuel cells (e.g., SOFCs) or electrolyzer cells (e.g., SOECs), separated by interconnects 10. In the embodiments below, the electrochemical cells 30 are described as being fuel cells. Referring to FIG. 1B, each fuel cell 30 comprises a cathode electrode 33, a solid oxide electrolyte 35, and an anode electrode 37. However, it should be noted that the electrochemical cells 30 may alternatively comprise electrolyzer cells which include a solid oxide electrolyte 35 located between an oxygen electrode 33 and a fuel electrode 37.

Various materials may be used for the cathode electrode 33, electrolyte 35, and anode electrode 37. For example, the anode electrode 37 may comprise a cermet comprising a nickel containing phase and a ceramic phase. The nickel containing phase may consist entirely of nickel in a reduced state. This phase may form nickel oxide when it is in an oxidized state. Thus, the anode electrode 37 is preferably annealed in a reducing atmosphere prior to operation to reduce the nickel oxide to nickel. The nickel containing phase may include other metals in addition to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 35 may comprise a stabilized zirconia, such as scandia stabilized zirconia (SSZ) or yttria stabilized zirconia (YSZ). Alternatively, the electrolyte 35 may comprise another ionically conductive material, such as a doped ceria.

The cathode electrode 33 may comprise an electrically conductive material, such as an electrically conductive perovskite material, such as lanthanum strontium manganite (LSM). Other conductive perovskites, such as LSCo, etc., or metals, such as Pt, may also be used. The cathode electrode 33 may also contain a ceramic phase similar to the anode electrode 37. The electrodes and the electrolyte may each comprise one or more sublayers of one or more of the above-described materials.

Electrochemical cell stacks 50 are frequently built from a multiplicity of SOFC's 30 in the form of planar elements, tubes, or other geometries. Although the fuel cell stack in FIG. 1A is vertically oriented, fuel cell stacks may be oriented horizontally or in any other direction. Fuel and air may be provided to the electrochemically active surface, which can be large. For example, fuel may be provided through fuel holes (e.g., fuel riser openings) 52 formed in each interconnect 10. The fuel holes 52 may be aligned to form fuel conduits that extend through the stack 50.

Each interconnect 10 electrically connects adjacent fuel cells 30 in the stack 50. In particular, an interconnect 10 may electrically connect the anode electrode 37 of one fuel cell 30 to the cathode electrode 33 of an adjacent fuel cell 30. FIG. 1B shows that the lower fuel cell 30 is located between two interconnects 10. An optional Ni mesh may be used to electrically connect the interconnect 10 to the anode electrode 37 of an adjacent fuel cell 30.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel, such as a hydrocarbon fuel, flowing to the fuel electrode (i.e., anode electrode 37) of one cell in the stack from oxidant, such as air, flowing to the oxygen electrode (i.e., cathode 33) of an adjacent cell in the stack.

Each interconnect 10 may be made of or may contain electrically conductive material, such as a metal alloy (e.g., chromium-iron alloy or a stainless steel, such as a ferritic stainless steel) which has a similar coefficient of thermal expansion to that of the solid oxide electrolyte in the cells (e.g., a difference of 0-10%). For example, the interconnects 10 may each include a metallic substrate comprising a high-temperature stable metal alloy, such as a chromium-iron alloy, such as 4-6 weight percent iron, optionally 1 or less weight percent yttrium and balance chromium alloy and may electrically connect the anode or fuel-side of one fuel cell 30 to the cathode or air side of an adjacent fuel cell 30. An electrically conductive contact layer, such as a nickel layer or mesh, may be provided between anode electrodes 37 and a fuel side of each interconnect 10. An electrically conductive protective layer 11, such as lanthanum strontium manganate and/or manganese cobalt spinel, may be provided on at least an air side of each interconnect 10.

Electrochemical cells, such as SOFCs and SOECs, are mechanically supported by one or more of their electrodes or electrolyte in order to increase handleability and reliability. For example, cells include electrode-supported cells, electrolyte-supported cells, and co-supported cells. Electrolyte-supported cells include a relatively thick electrolyte upon which relatively thin electrodes are formed. Electrode supported cells include a relatively thick supporting electrode (e.g., anode for a fuel cell) to provide structural support, and co-supported cells may include a relatively thick supporting electrode and a relatively thick electrolyte.

Electrolyte-supported cells offer numerous advantages including improved sealing resulting from a dense electrolyte perimeter and reduction stability due to having a thin anode. However, electrolyte-supported cells often exhibit higher area specific resistance (e.g., Ohmic resistance) values than electrode-supported cells because the electrolyte typically exhibits lower bulk electrical conductivity than the anode or cathode materials. For example, in electrolyte-supported solid oxide fuel cells, the ohmic resistance of the electrolyte may be the largest contributor to the total area specific resistance of the cell at typical operating temperatures (e.g., at about 800 to 850 °C).

Electrode-supported SOFCs and SOECs are typically produced by co-sintering a support electrode material and a coating of electrolyte material. Electrode-supported cells include anode-supported fuel cells having a relatively thick anode and cathode-supported fuel cells having a relatively thick cathode. The terms anode and cathode are reversed for electrolyzer cells.

The processing of anode-supported fuel cells (or cathode-supported electrolyzer cells) is comparatively simple because sintering temperatures in excess of 1300° C can be used to achieve dense electrolytes without concern for interaction between the electrode material and the electrolyte. However, anode-supported fuel cells and cathode-supported electrolyzer cells may suffer from redox instability, affecting the operational reliability of the cell when the fuel cell anode or electrolyzer cell cathode is exposed to changing oxygen partial pressures. Redox instability is caused by the volumetric expansion of Ni to NiO within the fuel cell anode or electrolyzer cell cathode, which may not be fully accommodated by the open pore space. As a result, cracks may form in the electrode that may decrease steady-state performance. Severe cracks can also extend to the electrolyte, reducing Nernstian voltage. Accordingly, various embodiments provide electrode and co-supported electrochemical cells having improved electrode redox stability.

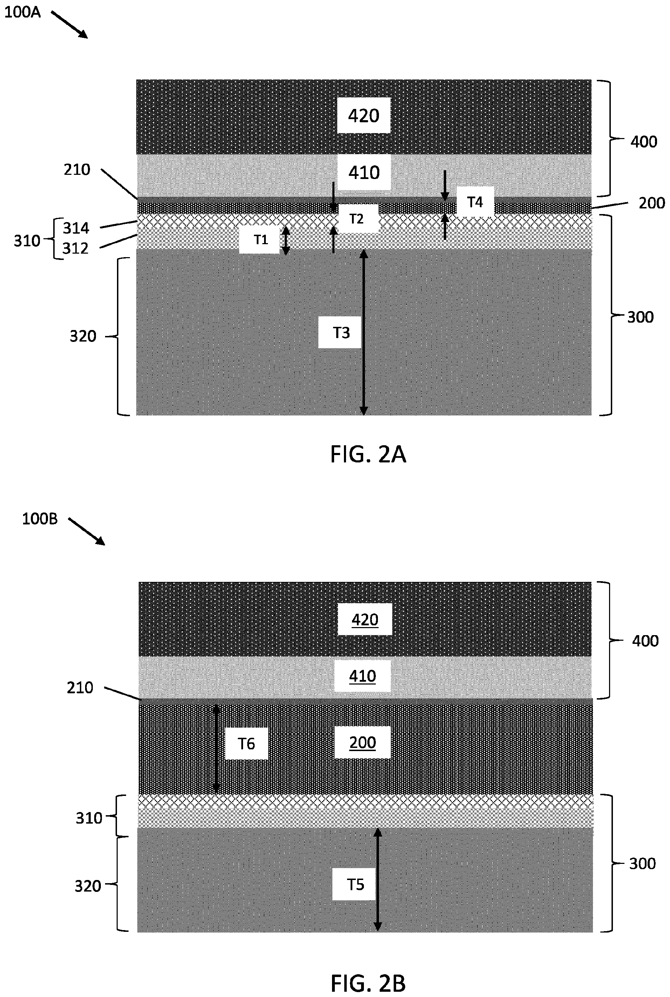

FIG. 2A is a cross-sectional view of an electrode supported electrochemical cell 100A, and FIG. 2B is a cross-sectional view of a co-supported electrochemical cell 100B, according to various embodiments of the present disclosure. The supporting electrode may comprise an anode electrode for a fuel cell or a cathode electrode for an electrolyzer cell. For simplicity, the fuel cell anode and the electrolyzer cell cathode will be referred to as a "fuel electrode" to which fuel or steam are supplied, respectively, during electrochemical cell operation. The opposing electrode (i.e., the fuel cell cathode and the electrolyzer cell anode) will be referred to as the "oxygen electrode" to which air is supplied during electrochemical cell operation.

Referring to FIGS. 2A and 2B, the electrochemical cells 100A, 100B may include an electrolyte 200, a fuel electrode 300 located on a first side (e.g., fuel electrode side) of the electrolyte 200, and an oxygen electrode 400 located on a second side (e.g., oxygen electrode side) of the electrolyte 200. The electrolyte 200 may be formed of an ionically conductive ceramic material, such as a doped zirconia material or a doped ceria material. For example, the electrolyte 200 may include scandia stabilized zirconia (SSZ), yttria stabilized zirconia (YSZ), yttria-ceria-stabilized zirconia (YCSZ), ytterbia-ceria-scandia-stabilized zirconia (YbCSSZ), or blends thereof.

Preferably, the electrolyte may include YbCSSZ, wherein scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference.

The electrolyte 200 may optionally include a barrier layer 210 located on the oxygen electrode side. The barrier layer 210 may be configured to reduce or prevent diffusion of oxygen electrode materials into the electrolyte 200. For example, the barrier layer 210 may be formed of a doped ceria material, such as samaria doped ceria (SDC) or gadolinia doped ceria (GDC).

The oxygen electrode 400 may be located on the barrier layer 210. The oxygen electrode 400 may be a single or multi-layer structure. For example, the oxygen electrode 400 may include an oxygen electrode functional layer 410 and an oxygen electrode contact layer 420. The oxygen electrode functional layer 410 may include an oxygen electrode catalyst, such as lanthanum strontium manganate, lanthanum strontium cobaltite, lanthanum strontium cobalt ferrite or lanthanum nickel ferrite. The oxygen electrode contact layer 420 may include an electrically conductive material, such as lanthanum strontium manganate configured to reduce electrical resistance between the oxygen electrode 400 and an adjacent component, such as an interconnect.

The fuel electrode 300 may include an active fuel electrode 310 located on the fuel electrode side of the electrolyte 200 and a fuel electrode support 320 located on the active fuel electrode 310. The active fuel electrode 310 may include a cermet comprising a nickel containing phase and an ionically conductive ceramic phase, such as SSZ, YSZ, or YbCSSZ, and/or a doped ceria such as gadolinia, yttria and/or samaria doped ceria, such as samaria-doped ceria (SDC). Preferably, the active fuel electrode 310 comprises a Ni-SDC cermet or a Ni-YbCSSZ cermet. In some embodiments, the Ni phase may include additional dopants, such as Mg, Ca and/or Ti to improve phase stability and/or redox tolerance.

The active fuel electrode 310 may be a single or multi-layer structure. For example, the active fuel electrode 310 may include a first functionally graded electrode (FGE) layer 312 and a second FGE layer 314. The first FGE layer 312 may include a higher ratio of the nickel containing phase to the ionically conductive ceramic phase than the second FGE layer 314.

The first FGE layer 312 may have a thickness T1 ranging from about 7 µm to about 17 µm, such as from about 10 µm to about 14 µm, or from about 11 µm to about 13 µm. The second FGE layer 314 may have a thickness T2 ranging from about 2 µm to about 10 µm, such as from about 4 µm to about 8 µm, or from about 5 µm to about 6 µm. However, the present disclosure is not limited to any particular FGE layer thicknesses.

The fuel electrode support 320 may be formed of a cermet material having a metal phase and a ceramic phase. For example, the fuel electrode support 320 may include a nickel-containing phase (e.g., nickel phase) and a ceramic phase. The nickel phase may include nickel and/or nickel alloy and may optionally include other additional metal dopants to improve phase stability and/or redox tolerance, as discussed in detail below. The nickel containing phase may be formed as a nickel oxide containing phase with or without additional metal dopant(s), which is subsequently reduced to a nickel containing phase before operation of the electrochemical cell.

The ceramic phase may comprise a stabilized zirconia, yttria stabilized zirconia (YSZ), scandia stabilized zirconia (SSZ), or yttria scandia stabilized zirconia (YSSZ), and/or a doped ceria material, such as gadolinia, yttria and/or samaria doped ceria. The ceramic phase may be optionally doped with additional phase stabilizers, as discussed in detail below. In one embodiment, the ceramic phase of the fuel electrode support 320 comprises YSZ comprising from about 4 mol% to about 10 mol% yttria (i.e., (4-10)-YSZ). The tetragonal 3-YSZ phase is metastable and is prone to a local phase change to a monoclinic phase. The increase in yttria content to 4 to 10 mol% increases the phase stability of YSZ. In various embodiments, the zirconia ceramic phase may include additional dopants (e.g., phase stabilizers) to improve phase stability, as will be described in more detail below. The zirconia ceramic phase that includes the additional phase stabilizer dopants may comprise the (4-10)-YSZ, or zirconia that contains less than 4 mol% yttria, such as 0 to 3 mol% yttria and/or 0 to 6 mol% scandia, such as 1 to 6 mol% scandia.

As shown in FIG. 2A, in the fuel electrode supported electrochemical cell 100A, the fuel electrode support 320 may have a thickness T3 ranging from about 50 µm to about 400 µm, such as from about 75 µm to about 300 µm, or from about 100 µm to about 200 µm. The electrolyte 200 may have a thickness T4 ranging from about 5 µm to about 15 µm, such as from about 8 µm to about 12 µm, or from about 10 µm to about 11 µm. Accordingly, the relatively thick fuel electrode support 320 may support the relatively thin electrolyte 200.

As shown in FIG. 2B, the co-supported electrochemical cell 100B may include a thinner fuel electrode support 320 and a thicker electrolyte 200 than in the fuel electrode supported electrochemical cell 100A. In particular, the fuel electrode support 320 may have a thickness T5 ranging from about 20 µm to about 100 µm, such as from about 25 µm to about 75 µm, or from about 40 µm to about 60 µm. The electrolyte 200 may have a thickness T6 ranging from about 20 µm to about 80 µm, such as from about 30 µm to about 70 µm, from about 40 µm to about 60 µm, or from about 50 µm to about 55 µm. The electrolyte 200 may be thicker than, thinner than or have the same thickness as the fuel electrode support 320. The relatively thick electrolyte 200 may be self-supporting. As such, the thickness of the fuel electrode support 320 may be reduced, as compared to the fuel electrode support 320 of the cell 100A, without compromising cell strength.

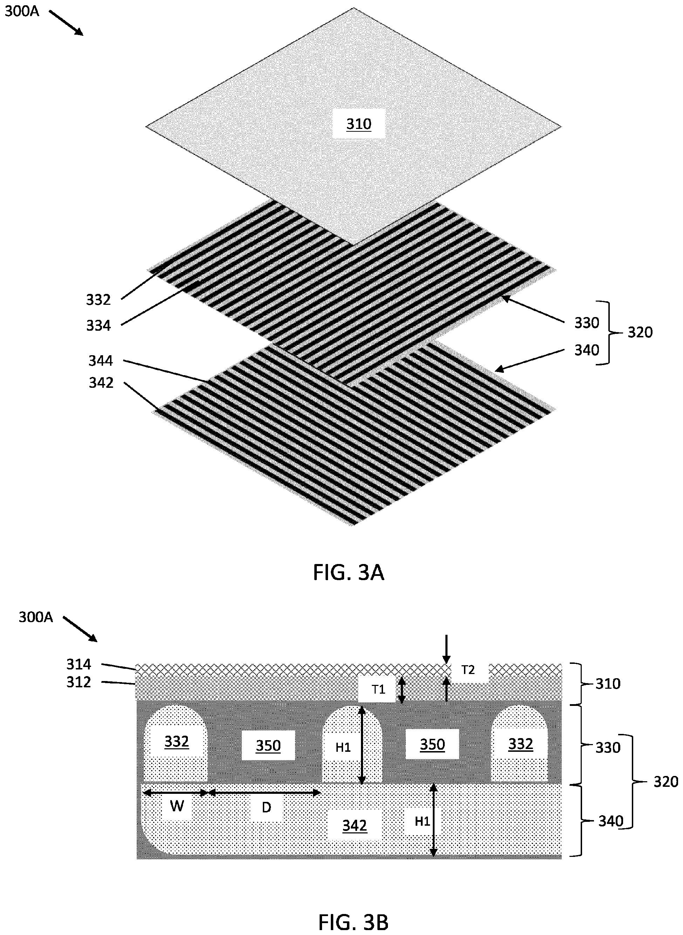

FIG. 3A is an exploded perspective view of an alternative fuel electrode 300A containing support ribs, according to various embodiments of the present disclosure, and FIG. 3B is a cross-sectional view of a portion of the fuel electrode 300A of FIG. 3A. The fuel electrode 300A may be used in the electrochemical cells 100A, 100B of FIGS. 2A and 2B.

Referring to FIGS. 3A and 3B, the fuel electrode 300A may include a continuous active fuel electrode 310 located on a fuel electrode support 320. The active fuel electrode 310 may include a nickel containing phase and an ionically conductive ceramic phase, such as a stabilized zirconia and/or doped ceria, as described above. The active fuel electrode 310 may be a single or multi-layer structure located on the fuel electrode support 320. For example, the active fuel electrode 310 may include a first functionally graded electrode (FGE) layer 312 and a second FGE layer 314. The first FGE layer 312 may include a higher ratio of the nickel containing phase to the ionically conductive phase than the second FGE layer 314.

The fuel electrode support 320 may include a first support layer 330 and a second support layer 340. The first support layer 330 may include first support ribs 332 located in a first matrix layer 334. The second support layer 340 may include second support ribs 342 located in a second matrix layer 344.

The support ribs 332, 342 may be formed of a ceramic material, such as yttria stabilized zirconia (YSZ), scandia stabilized zirconia (SSZ), yttria-scandia stabilized zirconia (YSSZ), and/or a doped ceria material, such as gadolinia, yttria and/or samaria doped ceria. The above ceramic material may be optionally doped with other elements to increase phase stability, as discussed below. In some embodiments, the ceramic support ribs 332, 342 have no free metal phase, such as a free nickel phase, and have a nickel content of less than about 1 mol%, such as less than 0.5 mol%, less than 0.25 mol%, less than 0.1 mol%, such as 0 to 0.01 mol%. In some embodiments, the support ribs 332, 342 may include no nickel, or only a trace amount of nickel diffused from the matrix layers 334, 344.

The first support ribs 332 may be oriented in a first horizontal direction parallel to each other. The second support ribs 342 may be oriented in a second horizontal direction parallel to each other. The first horizontal direction is different from the second horizontal direction such that the first support ribs 332 cross the second support ribs 342. In one embodiment, the first horizontal direction may be perpendicular to the second horizontal direction. For example, the first support ribs 332 and the second support ribs 342 may extend lengthwise in perpendicular directions. The ribs 332, 342 may be laminated to form a grid structure.

The matrix layers 334, 344 may be laminated to each other to form a conductive matrix 350 surrounding the ribs 332, 342. The matrix 350 (i.e., the matrix layers 334, 344) may be formed of a cermet material having a metal phase and a ceramic phase. For example, the matrix 350 may include a nickel-containing phase and a ceramic phase. The nickel containing phase may include nickel and/or nickel alloys and may optionally include other additional metals. The ceramic phase may comprise a stabilized zirconia, such as yttria and/or scandia stabilized zirconia and/or a doped ceria, such as gadolinia, yttria and/or samaria doped ceria. In some embodiments, the matrix 350 may preferably comprise a Ni-YSZ cermet, such as Ni-(4-10)YSZ cermet.

In various embodiments, the matrix 350 may have a higher porosity than the active fuel electrode 310, since the matrix 350 is supported by the ribs 332, 342. As such, the matrix 350 may have a high amount of free space to accommodate the expansion of nickel oxide during nickel oxide - nickel metal redox reactions. As such, the matrix 350 may have a higher nickel content than conventional anodes, and thus, a higher conductivity, without compromising redox stability. For example, the matrix 350 may have a nickel content that is at least 10 mol% higher than the active fuel electrode 310. However, the total amount of nickel included in the fuel electrode 300 may be less than conventional anodes, due to the low nickel content of the ribs 332, 342.

The ribs 332, 342 may have a lower coefficient of thermal expansion (CTE) than the matrix 350. The inclusion of the ribs 332, 342 in the fuel electrode 300 may reduce the amount of the matrix 350 included in the fuel electrode 300. As a result, the ribs 332, 342 may reduce green body fuel electrode shrinkage. In particular, high-temperature densification of the ribs 332, 342 may prevent or reduce warping of an adjacent electrolyte, due to cooling of the higher CTE of matrix 350.

Prior art anode supported fuel cells generally require a fuel electrode thickness of at least 300 µm, in order to prevent cell cambering and to produce a suitably flat cell. However, the strengthening provided by ribs 332, 342 may allow for a significantly reduced fuel electrode thickness.

In various embodiments, the ribs 332, 342 may have a height H1 ranging from about 15 µm to about 250 µm, such as from about 20 µm to about 100 µm, from about 25 µm to about 75 µm, or from about 25 µm to about 60 µm. However, the ribs 332, 342 may have any suitable height. The heights of the ribs 332, 342 may be the same or different. The ribs 332, 342 may have widths W ranging from about 0.25 mm to about 2 mm, such as from about 0.5 mm to about 1.5 mm, from about 0.75 mm to about 1.25 mm, or about 1 mm. A distance D between the ribs 332, 342 may range from about 5 mm to about 15 mm, such as from about 7 mm to about 13 mm, from about 8 mm to about 12 mm, or from about 9 mm to about 11 mm. However, the present disclosure is not limited to any particular rib dimensions.

The first FGE layer 312 may have a thickness T1 ranging from about 7 µm to about 17 µm, such as from about 10 µm to about 14 µm, or from about 11 µm to about 13 µm. The second FGE layer 314 may have a thickness T2 ranging from about 2 µm to about 10 µm, such as from about 4 µm to about 8 µm, or from about 5 µm to about 6 µm. However, the present disclosure is not limited to any particular FGE layer thicknesses.

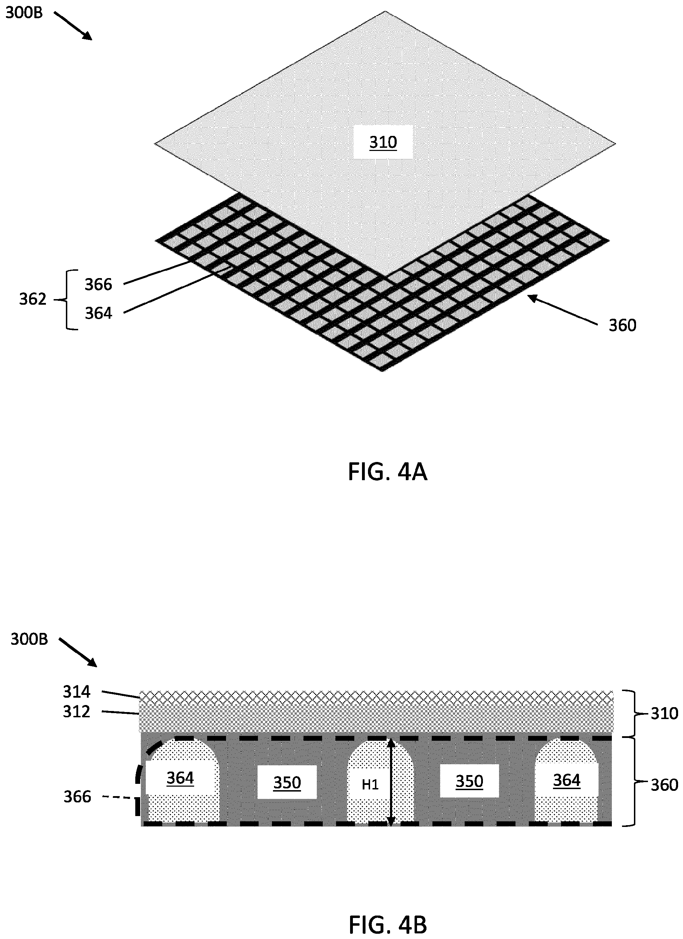

FIG. 4A is an exploded perspective view of an alternative fuel electrode 300B, according to various embodiments of the present disclosure, and FIG. 4B is a cross-sectional view of a portion of the fuel electrode 300B of FIG. 4A. The fuel electrode 300B may be used in the electrochemical cells 100A and 100B of FIGS. 2A and 2B. The fuel electrode 300B may also be similar to the fuel electrode 300A of FIGS. 3A and 3B. As such, only the differences therebetween will be discussed in detail.

Referring to FIGS. 4A and 4B, the fuel electrode 300B may include an active fuel electrode 310 located on a fuel electrode support 360. The fuel electrode support 360 may include a support grid 362 located in a conductive matrix 350. The support grid 362 may include coplanar first support ribs 364 and second support ribs 366 that extend lengthwise across one another. For example, the first support ribs 364 may extend orthogonally to the second support ribs 366. The conductive matrix 350 may be located between, around, above, and/or below the support grid 362. In some embodiments, the fuel electrode 300B may include an additional fuel electrode support layer (not shown) located below the support grid 362.

In various embodiments, the fuel electrode support 360 may be formed by gravure printing the support grid 362 on a support or web. Alternatively, the fuel electrode support 360 may be formed by screen printing, dispensing or ink jet printing to form the support grid 362 without the need to stack different material sheets. The conductive matrix 350 may be deposited on the support grid 362 by tape-casting using a doctor blade, for example.

Solid oxide fuel cell (SOFC) systems operate at high temperatures ranging from about 750 °C to about 950 °C. Under normal shutdown of an SOFC system, fuel supply to the SOFCs is stopped, which may result in an influx of oxygen to anode electrodes (i.e., fuel electrodes) while the SOFCs cool from the operating temperature to ambient temperature. SOEC systems may suffer from the same oxygen influx once steam supply to the SOEC cathode (i.e., fuel electrode) is stopped.

This influx of oxygen may result in the rapid oxidation of Ni to NiO within Ni-YSZ cermet fuel electrodes, which may result in a local volumetric expansion of about 70% or more. In the absence of sufficient fuel electrode porosity, this volumetric expansion may lead to fracturing of the fuel electrode electrodes and/or electrolytes, which may result in reactant crossover and/or catastrophic failure. In fuel electrode supported cells, the fuel electrode support may be responsible for the majority of the volumetric change, due to its relatively large thickness and/or its position on the outer surface of the cell.

According to various embodiments, the rate of nickel oxidation may be reduced to extend the time required for complete Ni oxidation beyond the normal stop cycle time. In other words, reducing the nickel oxidation rate may reduce the amount of nickel oxidation that occurs (e.g., may reduce the amount of NiO that is formed) during cooling of the cell, proving robust high power cells without oxidation induced fuel electrode damage. Additionally, in the event of total oxidation of the fuel electrode, a mechanically robust support should prevent or reduce the propagation of cracks by being made with high fracture toughness ceramics.

With regard to ceramic materials suitable for use in the ceramic phases of the fuel electrode supports 320 described above, metastable tetragonal three-molar YSZ (3-YSZ) offers increased toughness as compared to cubic 8-YSZ, because of a transformation toughening mechanism. In particular, crack tips, as stress concentrators, initiate a local phase change from tetragonal to monoclinic ZrO₂. This local phase change generates a high energy phase boundary that increases the energy barrier for crack propagation. However, the metastability of 3-YSZ also causes phase instability at high temperatures, in moist environments, and during thermal cycles.

According to various embodiments, the phase stability of YSZ fuel electrode support material may be increased by increasing the Y₂O₃ content of YSZ fuel electrode support material. For example, various embodiments may include YSZ fuel electrode support materials having a Y₂O₃ content ranging from about 4 to about 10 mol%, such as from about 5 to about 10 mol%, from about 6 to about 10 mol%, from about 7 to about 10 mol%, or from about 8 to about 10 mol% Y₂O₃.

The zirconia fuel electrode support materials may be additionally doped with one or more metal oxide phase stabilizers, such as aluminum oxide (Al₂O₃), cerium oxide (CeO₂), and/or titanium oxide (TiO₂). The zirconia ceramic phase that includes the additional phase stabilizer dopants may comprise the (4-10)-YSZ, or zirconia that contains less than 4 mol% yttria, such as 0 to 3 mol% yttria. The phase stabilizer dopants may reduce or prevent gradual monoclinic phase transformation of the ceramic phase of the fuel electrode support material.

For example, the YSZ fuel electrode materials may include from 0.1 to about 2 mol%, such as from about 0.5 to about 1 mol% Al₂O₃. In other words, the fuel electrode support material may be represented by the formula (ZrO₂)_{(1-(x+y))}(Y₂O₃)ₓ(Al₂O₃)_{y}, wherein x ranges from 0 to about 0.1, such as from about 0.04 to about 0.1, or from 0 to about 0.3, and y ranges from 0.001 to about 0.02. In some embodiments, y ranges from about 0.0025 to about 0.015. or from about 0.005 to about 0.01.

In some embodiments, the YSZ fuel electrode support material may include from about 2 to about 12 mol%, such as from about 3 to about 10 mol%, from about 4 to about 9 mol%, or from about 5 to about 8 mol% TiO₂. In other words, the fuel electrode support material may be represented by the formula (ZrO₂)_{(1-(x+y))}(Y₂O₃)ₓ(TiO₂)_{y}, wherein x ranges from 0 to about 0.1, such as from about 0.04 to about 0.1, or from 0 to about 0.3, and y ranges from 0.02 to about 0.12.

In some embodiments, the YSZ fuel electrode material may include from about 3 to about 55 mol%, from about 5 to about 50 mol%, or from about 10 to about 45 mol% CeO₂. In other words, the fuel electrode support material may be represented by the formula (ZrO₂)_{(1-(x+y))}(Y₂O₃)ₓ(CeO₂)_{y}, wherein x ranges from 0 to about 0.10, such as from about 0.04 to about 0.1, or from 0 to about 0.3, and y ranges from 0.03 to about 0.55.

In some embodiments, the YSZ fuel electrode material may include two or more, such as all three, of alumina, titania and/or ceria.

The present inventors have determined that doping YSZ fuel electrode support materials with ceria may also beneficially slow Ni phase oxidation. It is believed that Ce operates as an oxygen reservoir to slow Ni oxidation. In particular, CeO₂ dopants may form a non-stoichiometric oxide in reducing environments, such that Ce⁴⁺ reduces to Ce³⁺ which releases O²⁻ in the form of H₂O or CO₂ under fuel conditions (e.g., when the fuel electrode comprises a SOFC anode provided with fuel at steady-state cell operating temperatures). In the event of airflow into the cell chamber, O₂ in the air will react with available fuel to form H₂O or CO₂. If the pO₂ of the cell chamber increases, Ce³⁺ will re-oxidize and thermochemically generate H₂ or CO, which can in turn react with more incoming air.

When ceria dopant is utilized as an oxygen reservoir, the amount of ceria should be controlled to balance the amount of oxygen uptake with the chemical contraction produced upon oxidation. For example, the present inventors have calculated that in a hotbox including about 2000 SOFC cells, all of the oxygen may be removed from the air in the hotbox (e.g., from about 2 m³ of air), if the SOFC cell includes anodes that comprise yttria stabilized Ce_{0.5}Zr_{0.5}O₂. However, other dopant levels of ceria may be utilized in order to provide a balance between the better mechanical strength provided by lower ceria dopant levels and higher reservoir volume provided by higher ceria dopant amounts, as well as the effect of expansion and contraction of ceria-doped ZrO₂ in a redox event.

In various embodiments, the present inventors also determined that doping the fuel electrode support nickel phase with redox control dopants, such as magnesium (Mg), calcium (Ca), and/or titanium (Ti), may reduce the rate of both Ni oxidation and reduction. It is noted that Ni, Ti, and Ca may be converted between oxide and metallic forms during redox events (e.g., nickel oxide, titania and/or calcium oxide in the fuel electrode may be reduced after cell fabrication and then re-oxidized after cell shut down). However, Mg may remain in oxide form (MgO) during redox events (e.g., may remain as MgO inclusions) in metallic Ni after Ni reduction.

As such, the amount of redox control dopant may be selected to insure that the Ni oxidation rate is slow enough to prevent excessive nickel oxidation during shutdown operations, and the nickel reduction rate is fast enough to reduce the nickel oxide in a reasonable about of time during system start-up or restart. For example, the nickel containing phase of the fuel electrode support may be doped with from about 2 to about 8 wt.%, from about 3 to about 8 wt.%, or from about 4 to about 8 mol% of MgO, CaO, and/or TiO₂. In other words, the doped nickel in oxide form may be represented by the formula Ni₁₋ₓDₓO₂, wherein D is a dopant selected from Mg, Ca, and Ti, and x ranges from about 0.02 to about 0.08.

Ca diffusion has been shown to create insulating phases at fuel electrode electrode/electrolyte interfaces. However, the present inventors determined that Ca-doped Ni fuel electrode materials may be utilized in the fuel electrode support 320, without forming such insulating phases, as the distance between the fuel electrode support 320 and the electrolyte 200 prevents and/or significantly reduces Ca migration to the interface. As such, in various embodiments, Ca-doped Ni fuel electrode materials may be included in the nickel containing phase of the fuel electrode support 320. However, Ca may be excluded from the nickel containing phases of the first FGE layer 312 and/or the second FGE layer 314.

Accordingly, redox control dopants of the embodiments present disclosure may slow nickel oxidation kinetics, reduce nickel coarsening, and/or may reduce nickel mesh diffusion into the fuel electrode supports. The redox control dopants may also reduce cell voltage loss due to fuel electrode redox cycles and/or sulfur poisoning events, as compared to fuel electrodes which lack the redox control dopants.

According to various embodiments, the fuel electrodes including the above materials may be fabricated by any common ceramic processing method, including but not limited to tape casting, slot die coating, and/or screen printing.

Fuel cells and electrolyzer cells of the embodiments of the present disclosure are designed to reduce greenhouse gas emissions and have a positive impact on the climate.

Any one or more features from any one or more embodiments may be used in any suitable combination with any one or more features from one or more of the other embodiments. Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.
**The invention also refers to the following embodiments, wherein the term "claim" means "embodiment":**
1. An electrochemical cell, comprising:
   an electrolyte having a first side and an opposing second side;
   an oxygen electrode located on the first side of the electrolyte;
   a fuel electrode support; and
   an active fuel electrode located between the fuel electrode support and the second side of the electrolyte;
   wherein the fuel electrode support comprises a cermet comprising a nickel containing phase and a ceramic phase comprising 4 to 10 mol percent (mol%) yttria stabilized zirconia ((4-10)-YSZ)) or zirconia doped with at least one of alumina, ceria or titania.
2. The electrochemical cell of claim 1, wherein the ceramic phase comprises the (4-10)-YSZ doped with from about 0.1 mol% to about 1 mol% of the alumina.
3. The electrochemical cell of claim 1, wherein the ceramic phase comprises the (4-10)-YSZ doped with from about 3 mol% to about 55 mol% of the ceria.
4. The electrochemical cell of claim 1, wherein the ceramic phase comprises the (4-10)-YSZ doped with from about 2 mol% to about 12 mol% of the titania.
5. The electrochemical cell of claim 1, wherein the nickel containing phase comprises Ni doped with from about 2 mol% to about 8 mol% of MgO.
6. The electrochemical cell of claim 1, wherein the nickel containing phase comprises Ni doped with from about 2 mol% to about 8 mol% of CaO.
7. The electrochemical cell of claim 1, wherein the nickel containing phase comprises Ni doped with from about 2 mol% to about 8 mol% of TiO₂.
8. The electrochemical cell of claim 1, wherein the electrochemical cell is a fuel electrode supported cell or a co-supported cell.
9. The electrochemical cell of claim 1, wherein:
   the electrolyte comprises scandia stabilized zirconia (SSZ), yttria stabilized zirconia (YSZ), yttria-ceria-stabilized zirconia (YCSZ), ytterbia-ceria-scandia-stabilized zirconia (YbCSSZ), or a blend thereof; and
   the active fuel electrode comprises a cermet comprising a nickel containing phase and a doped ceria or a stabilized zirconia ceramic phase.
10. The electrochemical cell of claim 1, wherein the electrochemical cell comprises a solid oxide fuel cell, the oxygen electrode comprises a cathode electrode, the active electrode layer comprises an anode electrode, and the fuel electrode support comprises an anode support.
11. The electrochemical cell of claim 1, wherein the electrochemical cell comprises a solid oxide electrolyzer cell, the oxygen electrode comprises an anode electrode, the active electrode layer comprises a cathode electrode, and the fuel electrode support comprises a cathode support.
12. An electrochemical cell stack comprising electrochemical cells of claim 1 separated by interconnects.
13. An electrochemical cell, comprising:
   an electrolyte having a first side and an opposing second side;
   an oxygen electrode located on the first side of the electrolyte;
   a fuel electrode support; and
   an active fuel electrode located between the fuel electrode support and the second side of the electrolyte;
   wherein the fuel electrode support comprises a cermet comprising a ceramic phase and a nickel containing phase comprising nickel doped with at least one of magnesium oxide, calcium oxide, or titanium oxide.
14. The electrochemical cell of claim 13, wherein the nickel containing phase comprises Ni doped with from about 2 mol% to about 8 mol% of the magnesium oxide.
15. The electrochemical cell of claim 13, wherein the nickel containing phase comprises Ni doped with from about 2 mol% to about 8 mol% of the calcium oxide.
16. The electrochemical cell of claim 13, wherein the nickel containing phase comprises Ni doped with from about 2 mol% to about 8 mol% of the titanium oxide.
17. The electrochemical cell of claim 13, wherein the ceramic phase comprises 4 to 10 mol percent (mol%) yttria stabilized zirconia ((4-10)-YSZ)) or zirconia doped with at least one of alumina, ceria or titania.
18. The electrochemical cell of claim 17, wherein the ceramic phase comprises (4-10)-YSZ doped with:
   from about 0.1 mol% to about 1 mol% of the alumina;
   from about 3 mol% to about 55 mol% of the ceria; or
   from about 2 mol% to about 12 mol% of the titania.
19. An electrochemical cell stack comprising electrochemical cells of claim 13 separated by interconnects, wherein the electrochemical cell comprises a solid oxide fuel cell, the oxygen electrode comprises a cathode electrode, the active electrode layer comprises an anode electrode, and the fuel electrode support comprises an anode support.
20. An electrochemical cell stack comprising electrochemical cells of claim 13 separated by interconnects, wherein the electrochemical cell comprises a solid oxide electrolyzer cell, the oxygen electrode comprises an anode electrode, the active electrode layer comprises a cathode electrode, and the fuel electrode support comprises a cathode support.

## Claims

1. An electrochemical cell, comprising:
an electrolyte having a first side and an opposing second side;
an oxygen electrode located on the first side of the electrolyte;
a fuel electrode support; and
an active fuel electrode located between the fuel electrode support and the second side of the electrolyte;
wherein the fuel electrode support comprises a cermet comprising a nickel containing phase and a ceramic phase comprising 4 to 10 mol percent (mol%) yttria stabilized zirconia ((4-10)-YSZ)) or zirconia doped with at least one of alumina, ceria or titania.

2. The electrochemical cell of claim 1, wherein the ceramic phase comprises the (4-10)-YSZ doped with from about 0.1 mol% to about 1 mol% of the alumina.

3. The electrochemical cell of claim 1, wherein the ceramic phase comprises the (4-10)-YSZ doped with from about 3 mol% to about 55 mol% of the ceria.

4. The electrochemical cell of claim 1, wherein the ceramic phase comprises the (4-10)-YSZ doped with from about 2 mol% to about 12 mol% of the titania.

5. The electrochemical cell of claim 1, wherein the nickel containing phase comprises Ni doped with from about 2 mol% to about 8 mol% of MgO, CaO or TiO₂.

6. The electrochemical cell of claim 1, wherein the electrochemical cell is a fuel electrode supported cell or a co-supported cell.

7. The electrochemical cell of claim 1, wherein:
the electrolyte comprises scandia stabilized zirconia (SSZ), yttria stabilized zirconia (YSZ), yttria-ceria-stabilized zirconia (YCSZ), ytterbia-ceria-scandia-stabilized zirconia (YbCSSZ), or a blend thereof; and
the active fuel electrode comprises a cermet comprising a nickel containing phase and a doped ceria or a stabilized zirconia ceramic phase.

8. The electrochemical cell of claim 1, wherein the electrochemical cell comprises a solid oxide fuel cell, the oxygen electrode comprises a cathode electrode, the active electrode layer comprises an anode electrode, and the fuel electrode support comprises an anode support.

9. The electrochemical cell of claim 1, wherein the electrochemical cell comprises a solid oxide electrolyzer cell, the oxygen electrode comprises an anode electrode, the active electrode layer comprises a cathode electrode, and the fuel electrode support comprises a cathode support.

10. An electrochemical cell stack comprising electrochemical cells of claim 1 separated by interconnects.

11. An electrochemical cell, comprising:
an electrolyte having a first side and an opposing second side;
an oxygen electrode located on the first side of the electrolyte;
a fuel electrode support; and
an active fuel electrode located between the fuel electrode support and the second side of the electrolyte;
wherein the fuel electrode support comprises a cermet comprising a ceramic phase and a nickel containing phase comprising nickel doped with at least one of magnesium oxide, calcium oxide, or titanium oxide.

12. The electrochemical cell of claim 11, wherein the nickel containing phase comprises Ni doped with from about 2 mol% to about 8 mol% of the magnesium oxide, the calcium oxide or the titanium oxide.

13. The electrochemical cell of claim 11, wherein the ceramic phase comprises 4 to 10 mol percent (mol%) yttria stabilized zirconia ((4-10)-YSZ)) or zirconia doped with at least one of alumina, ceria or titania.

14. The electrochemical cell of claim 13, wherein the ceramic phase comprises (4-10)-YSZ doped with:
from about 0.1 mol% to about 1 mol% of the alumina;
from about 3 mol% to about 55 mol% of the ceria; or
from about 2 mol% to about 12 mol% of the titania.

15. An electrochemical cell stack comprising electrochemical cells of claim 11 separated by interconnects, wherein:
the electrochemical cell comprises a solid oxide fuel cell, the oxygen electrode comprises a cathode electrode, the active electrode layer comprises an anode electrode, and the fuel electrode support comprises an anode support; or
the electrochemical cell comprises a solid oxide electrolyzer cell, the oxygen electrode comprises an anode electrode, the active electrode layer comprises a cathode electrode, and the fuel electrode support comprises a cathode support.
